# EUROPÄISCHE PATENTANMELDUNG

(11) **EP 0 879 688 A1**
(43) Veröffentlichungstag der Anmeldung: **25.11.1998**
(21) Anmeldenummer: 98890146.8
(22) Anmeldetag: 19.05.1998
(51) Int. Cl.: B29C 45/17

(54) **Spritzgiesseinrichtung**

(30) Priorität: 22.05.1997 AT 873/97
(71) Anmelder: Svoboda, Georg, 1070 Wien (AT)
(72) Erfinder: Svoboda, Georg, 1070 Wien (AT)
(74) Vertreter: Gibler, Ferdinand

(57) **Zusammenfassung**

Spritzgießeinrichtung mit einem Rahmen, wobei eine ortsfeste und eine über eine Schließvorrichtung bewegbare Formaufspannplatte bzw. Formhälfte zwischen Rahmenabstützteilen einander gegenüberliegend angeordnet und schließbar sind, und wobei zumindest eine parallel zur Einrichtungslängsachse angeordnete Ausgleichsvorrichtung zum Ausgleich des durch die aufgebrachte Schließkraft im Rahmen während des Schließvorganges verursachten Biegemoments vorgesehen ist, und die Schließvorrichtung eine mechanische Kraftumsetzeinheit (9, 61) umfaßt, wobei zumindest eine Kraftwandlervorrichtung (8, 80) zur Umwandlung der aufgebrachten Schließkraft in einen Flüssigkeitsdruck vorgesehen ist, welche Kraftwandlervorrichtung (8, 80) mit ihrem zumindest einen Druckausgang (81, 82) mit der Ausgleichsvorrichtung (13) verbunden ist, und wobei gegebenenfalls der Ausgang der Kraftwandlervorrichtung (8, 80) mit einer Druckerzeugungseinheit (44, 45) verbindbar ist, über welche Flüssigkeitsdruck zur Erzeugung der Schließkraft aufbringbar ist.

## Beschreibung

Die Erfindung betrifft eine Spritzgießeinrichtung mit einem Rahmen, wobei eine ortsfeste und eine über eine Schließvorrichtung bewegbare Formaufspannplatte bzw. Formhälfte zwischen Rahmenabstützteilen einander gegenüberliegend angeordnet und schließbar sind, und wobei zumindest eine parallel zur Einrichtungslängsachse angeordnete Ausgleichsvorrichtung zum Ausgleich des durch die aufgebrachte Schließkraft im Rahmen während des Schließvorganges verursachten Biegemoments vorgesehen ist.

Bisher bekannte Einrichtungen der eingangs genannten Art setzen ein vollhydraulisches Schließsystem voraus, in welchem sich der Kolben des Schließzylinders über den vollen Schließ- und Öffnungshub bewegt und durch Druckerhöhung im Hydrauliksystem den Schließdruck bewirkt.

Neben diesen vollhydraulischen Schließsystemen sind jedoch auch Schließsysteme mit rein mechanischen Kraftumsetzeinheiten, wie z.B. Kniehebelübersetzungen, bekannt. Bei diesen wird die Schließbewegung mittels eines über einen Hydraulikzylinder oder einen elektromotorischen Gewindespindelantrieb bewegten Kniehebels durchgeführt und der Schließdruck in der Endphase durch Durchstrecken des Kniehebels dadurch erreicht, daß der die Rahmenabstützteile verbindende Rahmenteil gedehnt wird.

Wird diese mechanische Kraftumsetzeinheit auf eine Spritzgießeinrichtung mit einer Ausgleichsvorrichtung angewandt, so ist es schwierig, den Druck festzulegen, mit welchem die Gegenspannzylinder zu beaufschlagen sind, da der auftretende Schließdruck nicht genau bekannt ist.

Dazu ist aus der US-PS-5 536 166 eine Einrichtung bekanntgeworden, bei welcher mittels einer Zugkraftmeßeinrichtung die Kraft in einem der Zugholme gemessen wird und die Gegenspannzylinder mittels einer Ölpumpe und eines Druckregelorgans mit Druck beaufschlagt werden. Diese Methode ist jedoch äußerst ungenau und daher wenig geeignet, die Rahmendurchbiegung wirkungsvoll zu verhindern, da schon geringe Momentunterschiede eine erhebliche Abweichung von der Plattenparallelität ergeben. Außerdem muß auch die Kraftanstiegs- und -abfallkurve kongruent sein, was durch diese Ausführung nicht erreicht werden kann.

Aufgabe der Erfindung ist es daher, eine Einrichtung der eingangs genannten Art anzugeben, mit der die Abweichungen von der Plattenparallelität während des Schließvorganges sehr gering gehalten werden können.

Erfindungsgemäß wird dies dadurch erreicht, daß die Schließvorrichtung eine mechanische Kraftumsetzeinheit umfaßt, daß zumindest eine Kraftwandlervorrichtung zur Umwandlung der aufgebrachten Schließkraft in einen Flüssigkeitsdruck vorgesehen ist, welche Kraftwandlervorrichtung mit ihrem zumindest einen Druckausgang mit der Ausgleichsvorrichtung verbunden ist, und daß gegebenenfalls der Ausgang der Kraftwandlervorrichtung mit einer Druckerzeugungseinheit verbindbar ist, über welche Flüssigkeitsdruck zur Erzeugung der Schließkraft aufbringbar ist.

In der erfindungsgemäßen Einrichtung herrscht wie in einem vollhydraulischen Schließsystem sowohl in der Kraftwandlervorrichtung des Schließbereichs als auch in der Ausgleichsvorrichtung unabhängig von der Einstellung der mechanischen Kraftumsetzeinheit das gleiche Druckniveau, wodurch unmittelbar vor und während des Schließvorganges die Ausbildung von Biegemomenten in der erfindungsgemäßen Spritzgießeinrichtung vermieden werden. Weiters ist vorteilhafterweise die Art des Antriebes für die mechanische Kraftumsetzeinheit vollkommen unabhängig von dem in der Ausgleichsvorrichtung verwendeten Antrieb.

Erfolgt das Aufbringen der Schließkraft durch die weitere Druckerzeugungseinheit, so muß die mechanische Kraftumsetzeinheit nur einen geringen Teil der Schließkraft aufnehmen, wodurch diese mit einfacheren technischen Mitteln realisierbar ist.

In weiterer Ausbildung der Erfindung kann vorgesehen sein, daß die mechanische Kraftumsetzeinheit aus einem aus zumindest zwei gelenkig verbundenen Hebeln gebildeten, streckbaren Kniehebelelement gebildet ist.

Dadurch kann die bekannte Kniehebeltechnik auch für Spritzgießeinrichtungen mit Ausgleichsvorrichtungen angewandt werden, ohne daß es zu störenden Abweichungen von der Plattenparallelität kommen kann.

Gemäß einer weiteren Variante der Erfindung kann vorgesehen sein, daß zumindest ein erstes Hebelende an einer zwischen den Rahmenabstützteilen angeordneten Kraftwandlervorrichtung angelenkt ist, welche die auf die bewegbare Formaufspannplatte wirkende Schließkraft zumindest teilweise an die Ausgleichsvorrichtung weiterleitet, und daß gegebenenfalls die Schließkraft im gestreckten Zustand des Kniehebelelements über die Kraftwandlervorrichtung aufbringbar ist.

In diesem Zusammenhang kann auch vorgesehen sein, daß zumindest ein weiteres Hebelende des Kniehebelements an der bewegbaren Formaufspannplatte angelenkt sein, wodurch die vom Kniehebelelement erzeugte Schließkraft direkt auf die bewegbare Formaufspannplatte übertragbar ist.

Während des Durchstreckvorganges des Kniehebelsystems wirkt die auf die bewegbare Formaufspannplatte drückende Schließkraft auch auf die angelenkte Kraftwandlervorrichtung, deren Innendruck entsprechend erhöht wird, sodaß dieser solcherart ausgebildete Druck über die Verbindung mit der Ausgleichsvorrichtung dem bei der Schließkrafterzeugung auftretenden Biegemoment entgegenwirken kann. Geht aber vom Kniehebelelement keine Schließkraftwirkung aus, so kann diese durch die Druckerzeugungseinheit aufgebracht werden, die wiederum den Schließdruck über die Kraftwandlereinrichtung aufbringt.

Erfolgt das Aufbringen der Schließkraft erst im gestreckten Zustand der Kniehebelgelenke durch die Druckerzeugungseinheit, so werden diese in ihrer Streckbewegung von der Schließkraft entlastet. Gerade im letzten Schwenkbereich vor dem gestreckten Zustand tritt aber bei bekannten Kniehebelelementen in den Hebelgelenken ein kritischer Belastungszustand auf, da die Lager nur mehr eine sehr kleine Winkelbewegung ausführen und sich daher kein Schmierfilmkeil mehr aufbauen kann, der Gelenksdruck aber dabei stark ansteigt.

Eine besonders platzsparende Ausbildung der Erfindung kann darin bestehen, daß die Kraftwandlervorrichtung innerhalb der bewegbaren Formaufspannplatte angeordnet ist, welche durch einen innerhalb der bewegbaren Formaufspannplatte ausgenommenen Zylinderraum gebildet ist, in welchem ein Kolben bewegbar geführt ist.

In weiterer Ausbildung der Erfindung kann vorgesehen sein, daß das Kniehebelelement aus über zumindest ein Gelenk miteinander verbundenen Hebeln gebildet ist, über welches Gelenk unter Streckung der beiden Hebeln mittels eines hydraulischen Antriebes das Kniehebelelement aus einem außermittigen in den gestreckten Zustand bewegbar ist.

Das Antriebssystem für das Kniehebelelement erfordert dabei keine Rücksichtnahme auf die Antriebsart der Ausgleichsvorrichtung, da das Kniehebelelement keinen unmittelbaren Einfluß auf deren Funktion hat.

Gemäß einer anderen Variante der Erfindung kann vorgesehen sein, daß das Kniehebelelement aus über zumindest ein Gelenk miteinander verbundenen Hebeln gebildet ist, über welches Gelenk unter Streckung der beiden Hebeln mittels eines elektromotorischen Gewindespindelantriebes das Kniehebelelement aus einem außermittigen in den gestreckten Zustand bewegbar ist.

Auch die Verwendung eines elektromotorischen Gewindespindelantriebes ist völlig unabhängig von der Ausgleichsvorrichtung konstruktiv durchführbar.

Gemäß einer anderen Variante der Erfindung kann die aufbringbare Schließkraft erhöht werden, indem das Kniehebelement mit vier oder fünf Gelenken ausgeführt ist.

In weiterer Ausbildung der Erfindung kann vorgesehen sein, daß das Kniehebelelement zweiteilig ausgebildet und entlang der Einrichtungslängsachse angetrieben ist, wobei die beiden Teile symmetrisch zur Einrichtungslängsachse jeweils an der bewegbaren Formaufspannplatte und an einer gegenüber einem der Rahmenabstützteile abgestützten Trägerplatte angelenkt sind, welche Trägerplatte den Kniehebelelementantrieb trägt, wobei die Anlenkpunkte während des Schließvorganges sich mit der bewegbaren Formaufspannplatte entlang zur Einrichtungslängsachse parallelen Achsen bewegen, und daß jeweils eine mit den parallelen Achsen fluchtende Kraftwandlervorrichtung angeordnet ist.

Dadurch kann die Schließkraft symmetrisch zur Einrichtungslängsachse an zwei Punkten der bewegbaren Formaufspannplatte aufgebracht werden. Es kann damit eine gleichmäßigere Schließkraftwirkung erzielt werden.

Eine besonders vorteilhafte Ausbildung der Erfindung kann darin bestehen, daß die Kraftwandlervorrichtungen innerhalb der Trägerplatte angeordnet sind. Damit ergibt sich eine platzsparende und leicht zugängliche Anordnung dieser Vorrichtungen in der Nähe der Schließvorrichtung.

Gemäß einer anderen Variante der Erfindung kann die mechanische Kraftumsetzvorrichtung aus einem eine antreibbare Spindel und einen Gewindezylinder umfassenden Spindelantrieb gebildet sein. Auch bei dieser rein mechanischen Schließvorrichtung wird durch das erfindungsgemäße Vorsehen einer Kraftwandlervorrichtung sowohl ein statischer als auch ein dynamischer Ausgleich der Biegemomente erwirkt.

Dazu kann in Weiterbildung der Erfindung vorgesehen sein, daß die antreibbare Spindel des Spindelantriebs stirnseitig in das Gewinde des Gewindezylinders eingreift, und daß eine Antriebseinheit der Spindel gegenüber einem der Rahmenabstützteile abgestützt und der Gewindezylinder an seinem freien Ende mit der innerhalb der bewegbaren Formaufspannplatte angeordneten Kraftwandlervorrichtung verbunden ist.

Auf diese Weise wird zwischen dem Spindelantrieb und der bewegbaren Formaufspannplatte die gerade wirkende Schließkraft auf die Kraftwandlervorrichtung übertragen und von dieser ein die Biegemomente ausgleichender Druck weitergeleitet.

Dabei kann gemäß einer weiteren Ausbildung der Erfindung die Kraftwandlereinrichtung durch einen innerhalb der bewegbaren Formaufspannplatte ausgenommenen Zylinderraum gebildet sein, in welchem ein Kolben bewegbar geführt ist, der mit dem Gewindezylinder verbunden ist. Dadurch ist die in der bewegbaren Formaufspannplatte integrierte Kraftwandlervorrichtung direkt mit dieser verbunden, sodaß die von der Schließvorrichtung ausgeübte Schließkraft über den Kolben und die im Zylinder befindliche Flüssigkeit an die Formaufspannplatte weitergeleitet wird.

Gemäß einem weiteren Merkmal der Erfindung kann vorgesehen sein, daß die hydraulische Druckerzeugungseinheit sowohl mit der Kraftwandlervorrichtung als auch mit der Ausgleichsvorrichtung verbunden ist, wobei die Schließkraft und die das Biegemoment ausgleichende Kraft über die Druckerzeugungseinheit aufbringbar sind.

So kann z.B. das nicht unter der Schließkraftbelastung stehende Kniehebelgelenk vollkommen gestreckt und danach über die zusätzliche hydraulische Druckerzeugungseinheit die Schließkraft aufgebracht werden, wodurch die Gelenke von hydrodynamischen Einflüssen befreit sind und die Schließkraft nur mehr statisch auf die Gelenke einwirkt. Das Kniehebelelement wird somit ausschließlich für die Formbewegung und nicht für die Schließkraftaufbringung benutzt.

Gemäß einer anderen Ausführungsform der Erfindung kann zu diesem Zweck vorgesehen sein, daß die zusätzliche Druckerzeugungseinheit aus einem hydraulischen Zylinder und einem darin geführten Kolben mit Schaft gebildet ist, welcher Schaft an seinem freien Ende ein Außengewinde zum Eingriff in ein über einen Motor angetriebenes Drehteil mit entsprechendem Innengewinde aufweist.

Die Rotation des Drehteils bewirkt die Verschiebung des Schaftes im Zylinder und damit Druckerhöhung bzw. Druckerniedrigung. Dadurch kann die Schließkraft und die Ausgleichskrafi völlig unabhängig vom Antrieb des Kniehebelgelenks ausgeübt werden.

Gemäß einer weiteren Ausführungsform der Erfindung kann die Kraftwandlervorrichtung aus einem hydraulischen Zylinder und einem darin geführten Kolben gebildet sein, welcher Kolben innerhalb des Zylinders mit seiner Stirnseite einen ersten veränderbaren Zylinderraum begrenzt, welcher erste Zylinderraum über einen Druckausgang und eine Druckleitung mit der Ausgleichsvorrichtung verbunden ist.

In weiterer Ausbildung der Erfindung kann vorgesehen sein, daß der Kolben mit seinem der Stirnseite gegenüberliegenden Schaftteil einen zweiten veränderbaren Zylinderraum des Zylinders begrenzt, welcher zweite Zylinderraum über einen weiteren Druckausgang und eine weitere Druckleitung mit der Ausgleichsvorrichtung verbunden ist.

Dieser weitere Zylinderraum kann vor allem zur nach dem Schließvorgang zu vollziehenden Öffnungsbewegung der bewegbaren Formaufspannplatte mit Druck beaufschlagt werden.

Eine erfindungsgemäße Weiterbildung kann darin bestehen, daß die Kraftwandlervorrichtung zwischen einem der Rahmenabstützteile und der Schließvorrichtung angeordnet ist.

Eine solche Ausführungsform ermöglicht eine mechanisch einfache und robuste Konstruktion. Es kann die Kraftwandlervorrichtung aber nicht nur innerhalb des Einrichtungsrahmens angebracht werden, sondern es ist auch das Verlegen einer solchen Vorrichtung nach außerhalb der Rahmenteile möglich, wenn die Schließkraft entsprechend umgeleitet wird.

Weiters besteht aber auch die Möglichkeit gemäß einer anderen Variante der Erfindung die Kraftwandlervorrichtung zwischen der Schließvorrichtung und der bewegbaren Formaufspannplatte anzuordnen, wobei eine Integration der Kraftwandlervorrichtung in der bewegbaren Formaufspannplatte sehr leicht durchführbar ist.

Zur Berücksichtigung verschiedener Formhöhen kann gemäß einer weiteren Variante der Erfindung vorgesehen sein, daß der Abstand zwischen dem einen Rahmenabstützteil und der Kraftwandlervorrichtung mittels eines motorisch antreibbaren Zahnkranzes veränderbar ist, welcher Zahnkranz eine zentrale Gewindebohrung aufweist, in welcher ein mit einem entsprechenden Außengewinde versehener und mit dem Kolben der Kraftwandlervorrichtung verbundener Schaft eingreift.

Gemäß einer anderen Variante der Erfindung kann vorgesehen sein, daß die Ausgleichsvorrichtung durch einen hydraulischen Zylinder und einen darin bewegbaren Kolben gebildet ist, und daß der Kolben stirnseitig und schaftseitig jeweils einen veränderbaren Raum begrenzt, wobei der stirnseitige Raum mit dem stirnseitigen Raum der Kraftwandlervorrichtung und der schaftseitige Raum mit dem schaftseitigen Raum der Kraftwandlervorrichtung verbunden sind.

Dadurch wird die jeweils auf die Formaufspannplatten wirkende Kraft auf die auf die Ausgleichsvorrichtung übertragen und bewirkt dort die augenblickliche Kompensation des wirkenden Biegemoments.

Die Erfindung wird nachstehend anhand der in den Zeichnungen dargestellten Ausführungsbeispiele eingehend erläutert. Es zeigt dabei
Fig. 1 einen teilweisen Aufriß einer Ausführungsform der erfindungsgemäßen Spritzgießeinrichtung;
Fig.2, 3, 4 und 5 einen Aufriß einer jeweils weiteren Ausführungsform der erfindungsgemäßen Spritzgießeinrichtung;
Fig.6 einen Grundriß einer Ausführungsform der erfindungsgemäßen Spritzeinrichtung und
Fig.7 und Fig.8 einen Aufriß einer jeweils weiteren Ausführungsform der erfindungsgemäßen Spritzeinrichtung.

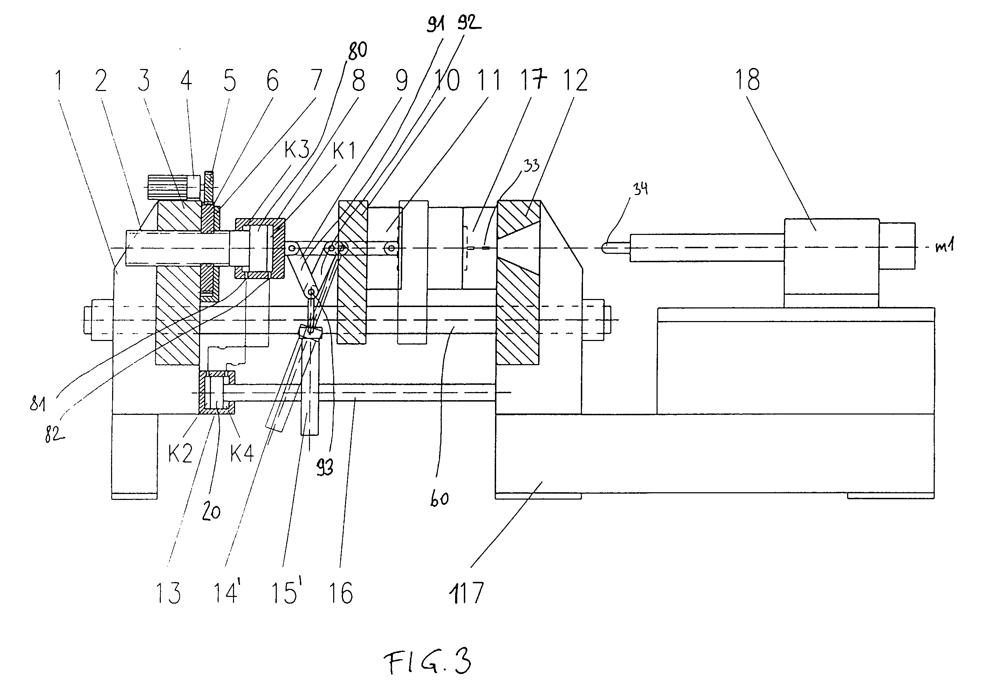

In Fig. 2 ist eine Spritzgießeinrichtung mit einem aus Rahmenhäuptern 3, 12 und zwei an diesen abgestützten, zur Einrichtungslängsachse m1 parallelen Zugholmen 60 bestehenden Rahmen dargestellt, welche Zugholme 60 beliebig angeordnet sein können und hinsichtlich ihrer Anzahl im Rahmen der Erfindung nicht begrenzt sind.

Die Rahmenhäupter 3, 12 bilden Rahmenabstützteile, zwischen denen eine ortsfeste Formhälfte 17 und eine bewegbare Formaufspannplatte 10 mit einer Formhälfte 11 einander gegenüberliegend angeordnet und schließbar sind.

Die auf einem zweiteiligen Sockel 117 gelagerten Rahmenhäupter 3, 12 sind jeweils aus einem im wesentlichen quer zur Einrichtungslängsachse m1 verlaufenden Mittelteil 3, 12 und zwei mit dem Mittelteil verbundenen, im wesentlichen parallel zur Längsachse auskragenden Seitenteilen 1, 21 gebildet, die jeweils von den parallelen Zugholmen 60 durchsetzt sind. Der zweiteilige Sockel 117 trägt weiters eine die Spritzmasse zuführende Spritzeinheit 18, welche üblicherweise eine Plastifizierschnecke beinhaltet, mit der der zu spritzende Werkstoff in plastifiziertem Zustand über eine Einspritzdüse 34 einem in der Längsachse m1 verlaufenden Einspritzkanal 33 der erfindungsgemäßen Einrichtung zugeführt wird, zu welchem Zweck die in Fig.2 ersichtliche Spritzeinheit 18 mit ihrer Einspritzdüse 34 an diesen Einspritzkanal 33 herangeführt wird.

Die Achse m1 stellt auch die Wirkungslinie der während des Schließvorganges erzeugten Schließkraft dar, mit der die bewegbare Formaufspannplatte 10 während des Spritzvorganges mit der darauf befindlichen Formhälfte 11 gegen die auf dem Rahmenhaupt 12 aufgespannte Formhälfte 17 gedrückt wird.

Zum Ausgleich des durch die Schließkraft im Rahmen verursachten Biegemomentes ist eine parallel zur Einrichtungslängsachse m1 angeordnete Ausgleichsvorrichtung 13, 20 vorgesehen.

Erfindungsgemäß umfaßt die die Schließkraft aufbringende Schließvorrichtung eine mechanische Kraftumsetzeinheit, welche gemäß Fig. 2 durch ein Kniehebelelement 9 gebildet ist, bei dem die Schließkraft durch die Hebelbewegung umgesetzt wird.

Die bewegbare Formaufspannplatte 10 ist dabei über das aus zumindest zwei gelenkig verbundenen Hebeln 91, 92 gebildete streckbare Kniehebelelement 9 bewegbar, mit welchem beim Übergang in den gestreckten Zustand die Schließkraft aufbringbar ist.

Um eine Abweichung von der Plattenparallelität während des Schließvorganges zu verhindern, ist in der Einrichtungslängsachse m1 in Wirkverbindung mit der Schließvorrichtung 9 eine Kraftwandlervorrichtung 8, 80 zur Umwandlung der aufgebrachten Schließkraft in einen Flüssigkeitsdruck vorgesehen, welche Kraftwandlervorrichtung 8, 80 mit der Ausgleichsvorrichtung 13, 20 verbunden und in diesem Ausführungsbeispiel zwischen dem Rahmenhaupt 3 und der Schließvorrichtung 9 angeordnet ist.

Ein erstes Hebelende des Kniehebelelements 9 ist an der bewegbaren Formaufspannplatte 10 und ein weiteres Hebelende an der Kraftwandlervorrichtung 8, 80 angelenkt, welche die auf die bewegbare Formaufspannplatte 10 wirkende Schließkraft zumindest teilweise an die Ausgleichsvorrichtung 13, 20 weiterleitet.

Wesentlich ist dabei nicht der Aufbau des Kniehebelelements, welches auch mehrere, z.B. fünf Gelenke umfassen kann, sondern die Kopplung an die Kraftwandlervorrichtung 8, 80, da diese mit der Ausgleichsvorrichtung 13, 20 hydraulisch verbunden ist und immer den augenblicklich anliegenden Druck sofort an diese weiterleitet.

Im Ausführungsbeispiel gemäß Fig.2 wird die Schließkraft durch das Durchstrecken des Kniehebelelementes 9 aufgebracht, wobei beim gegenseitigen Berühren der Formenhälften 11, 17 das Kniehebelelement 9 noch nicht in seinem gestreckten Zustand ist. Durch das Durchstrecken wird das Hydrauliköl in der Kraftwandlervorrichtung 8, 80 komprimiert und dieser Druck überträgt sich in geeignetem Ausmaß auf die Ausgleichsvorrichtung 13, 20.

Die das Kniehebelelment bildenden Hebeln 91, 92 sind über ein Gelenk 93 miteinander verschwenkbar verbunden. Das Gelenk 93 wird während der Form- bzw. Schließbewegung unter Streckung der beiden Hebeln 91, 92 mittels eines elektromotorischen Gewindespindelantriebes 14, 15 aus einem außermittigen in den gestreckten Zustand bewegt.

Die Kraftwandlervorrichtung ist aus einem am Kniehebelelement 9 angelenkten hydraulischen Zylinder 8 und einem darin geführten und an dem einen Rahmenhaupt 3 abgestützten Kolben 80 gebildet, der innerhalb des Zylinders 8 mit seiner Stirnseite einen ersten veränderbaren Zylinderraum K1 begrenzt, welcher erste Zylinderraum K1 über einen Druckausgang 82 und eine Druckleitung mit der Ausgleichsvorrichtung 13, 20 verbunden ist.

Weiters begrenzt der Kolben 80 mit seinem der Stirnseite gegenüberliegenden Schaftteil einen zweiten veränderbaren Zylinderraum K3 des Zylinders, welcher zweite Zylinderraum K3 über einen weiteren Druckausgang 81 und eine weitere Druckleitung mit der Ausgleichsvorrichtung 13, 20 verbunden ist.

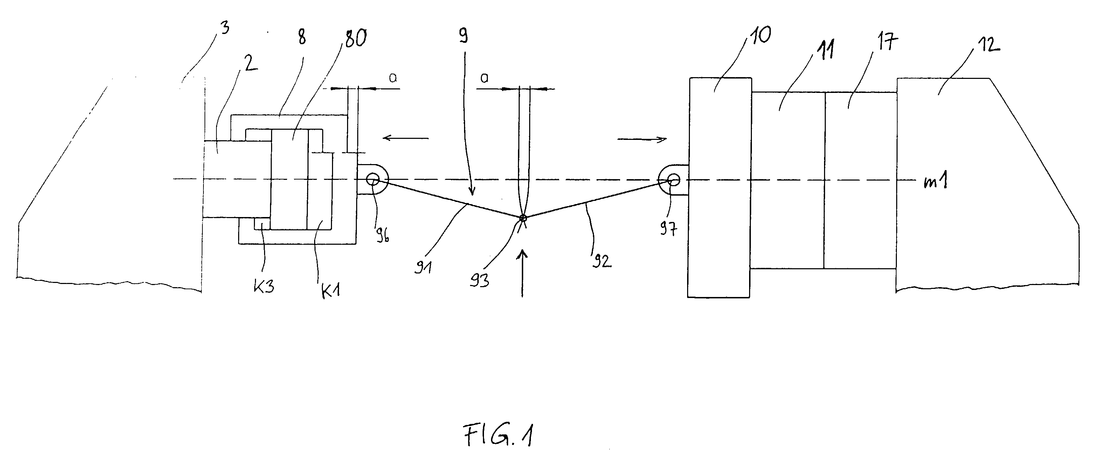

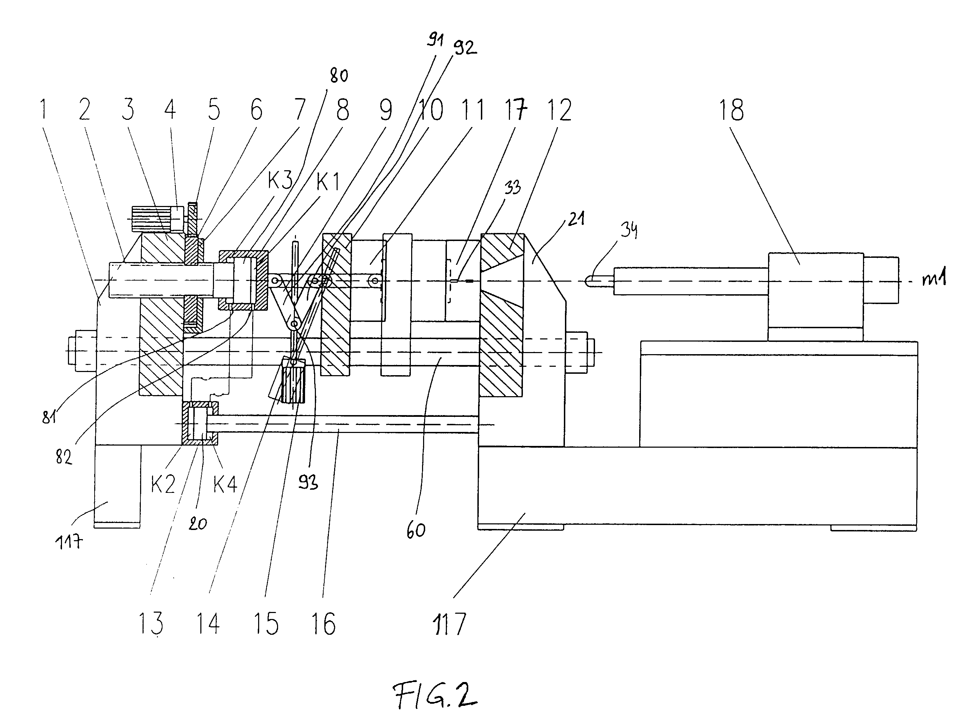

Die dabei ausgeführten Bewegungen sind in Fig. 1 schematisch hervorgehoben. Die auf das Gelenk 93 des Kniehebelelementes 9 in Pfeilrichtung wirkende Kraft wird über die Hebel 91, 92 und die Gelenke 96, 97 in eine entlang der Längsachse m1 vor sich gehende Verschiebebewegung umgesetzt, wobei einerseits die Formhälften 11, 17 geschlossen und andererseits der Zylinder 8 gegen den Kolben 80 gedrückt wird, sodaß das im Zylinder 8 befindliche Hydrauliköl komprimiert wird. Dieser entstehende Druck wird über eine in Fig. 1 nicht dargestellte Druckleitung in die Ausgleichsvorrichtung 13, 20 (Fig.2) weitergeleitet.

Die Kraftwandlervorrichtung kann auch in anderer als in der Fig.2 dargestellten Form realisiert sein, solange sie die wirkende Schließkraft in Form eines hydraulischen Druckes direkt an die Ausgleichsvorrichtung 13, 20 weiterleitet.

Die Ausgleichsvorrichtung ist im Ausführungsbeispiel gemäß Fig.2 durch einen hydraulischen Zylinder 13 und einen darin bewegbaren Kolben 20 mit Schaft 16 gebildet, wobei der Kolben 20 stirnseitig und schaftseitig jeweils einen veränderbaren Raum K2, K4 begrenzt und der stirnseitige Raum K2 mit dem stirnseitigen Raum K1 der Kraftwandlervorrichtung 8, 80 und der schaftseitige Raum K4 mit dem schaftseitigen Raum K3 der Kraftwandlervorrichtung 8, 80 über deren Druckausgänge 82 bzw. 81 und Druckleitungen verbunden sind.

Um die erfindungsgemäße Einrichtung auf die jeweilige Formhöhe anpassen zu können, ist der Abstand zwischen dem einen Rahmenhaupt 3 und der Kraftwandlervorrichtung 8, 80 mittels eines motorisch antreibbaren Zahnkranzes 6 veränderbar, welcher seinerseits eine zentrale Gewindebohrung aufweist, in der ein mit einem entsprechenden Außengewinde versehener und mit dem Kolben 80 der Kraftwandlervorrichtung verbundener Schaft 2 eingreift. Der über einen Motor 4 und ein Antriebszahnrad 5 antreibbare Zahnkranz 6 ist durch eine Lagerschale 7 drehbar am Rahmenhaupt 3 gehalten, sodaß sich bei Rotation des Zahnkranzes 6 der Kolbenschaft 2 je nach Drehrichtung in Richtung des gegenüberliegenden Rahmenhauptes 12 oder in der dazu entgegengesetzten Richtung bewegt und damit der Abstand zwischen bewegbarer und feststehender Formhälfte 11, 17 einstellbar ist.

Die Ausführungsform gemäß Fig.3 unterscheidet sich gegenüber der in Fig.2 dargestellten dadurch, daß in dieser der Antrieb des Kniehebelelementes 9 über ein hydromechanisches Antriebssystem 14', 15' erfolgt. Auch in diesem Beispiel besteht Unabhängigkeit des Kniehebelelementantriebs vom Antrieb der Ausgleichsvorrichtung.

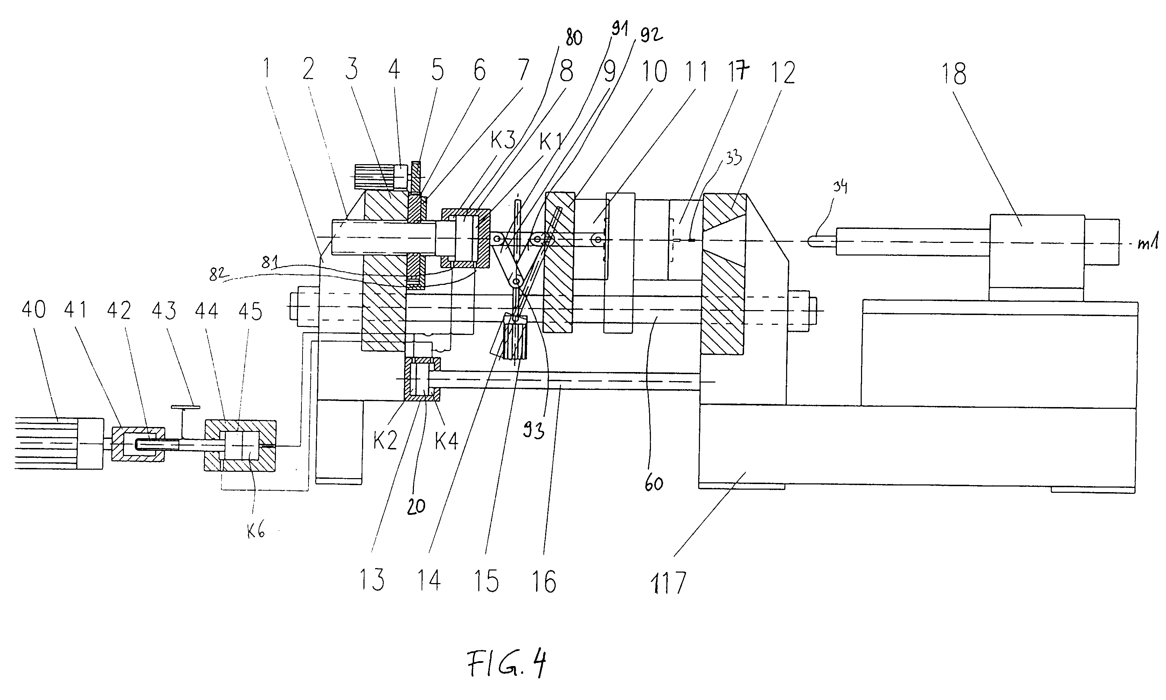

In der Variante der erfindungsgemäßen Spritzgießeinrichtung gemäß Fig. 4 ist die Schließkraft in gestrecktem Zustand des Kniebhebelgelenks 9 über die Kraftwandlervorrichtung 8, 80 zusätzlich aufbringbar.

Dazu ist eine zusätzliche hydraulische Druckerzeugungseinheit 44, 45 über Druckleitungen sowohl mit der Kraftwandlervorrichtung 8, 80 als auch mit der Ausgleichsvorrichtung 13, 20 verbunden, wobei die Schließkraft und die das Biegemoment ausgleichende Kraft über die zusätzliche Druckerzeugungseinheit 44, 45 aufbringbar sind.

Das Kniehebelelement 9 wird zunächst, ohne dabei Schließkraft zu übertragen, in seinen durchgestreckten Zustand gebracht, sodaß sich die Formhälften 11, 17 gerade berühren. Dadurch ist nun eine kraftschlüssige Verbindung zwischen der Kraftwandlervorrichtung 8, 80 und der bewegbaren Formaufspannplatte 10 hergestellt und die Schließkraft wird mittels der zusätzlichen hydraulischen Druckerzeugungseinheit 44, 45 aufgebracht. Der Vorteil dabei ist die wesentlich geringere Abnützung der Gelenke 93, 96, 97 des Kniehebelgelenkes 9, da im gestreckten Zustand der Druck nur mehr statisch wirkt.

Die zusätzliche Druckerzeugungseinheit ist aus einem hydraulischen Zylinder 44 und einem darin geführten Kolben 45 mit Schaft 42 gebildet, welcher Schaft 42 an seinem freien Ende ein Außengewinde zum Eingriff in ein über einen Motor 40 angetriebenes Drehteil 41 mit entsprechendem Innengewinde aufweist.

Wird die Welle des Motors 40 in Drehbewegung gesetzt, verschiebt das rotierende Drehteil 41 den Schaft 42 und mit ihm den Kolben 45 im Zylinder 44. Der in diesem ausgebildete stirnseitige Zylinderraum K6 ist mit den Zylinderräumen K1 und K2 verbunden, in welche der im Zylinder 44 entstehende Druck an die Kraftwandlervorrichtung 8, 80 und die Ausgleichsvorrichtung 13, 20 weitergeleitet wird. Über ein Wegmeßsystem 43 wird dabei der Verschiebeweg des Schaftes 42 erfaßt, welcher proportional dem Kompressionsvolumen und dem im Zylinder 44 herrschenden Druck ist.

Eine solche Druckerzeugungseinheit kann aber auch gänzlich anders realisiert werden, ohne dabei den Rahmen der Erfindung zu verlassen. So kann der Schließdruck auch über eine elektrisch angetriebene Ölpumpe erzeugt werden.

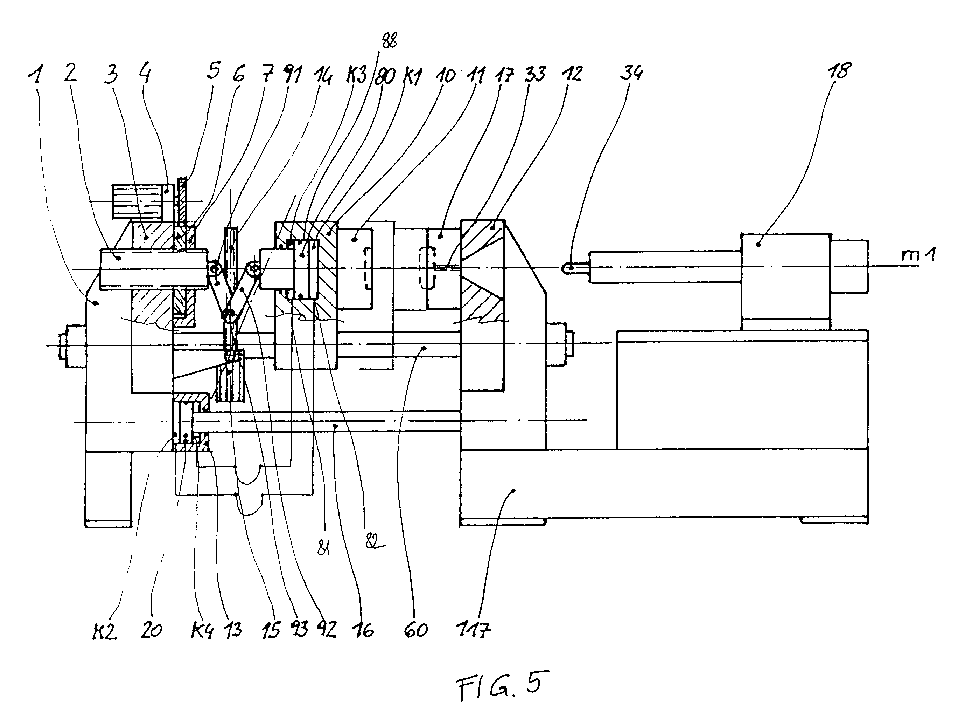

In der in Fig.5 dargestellten Erfindungsvariante ist eine andere Anordnung der Kraftwandlervorrichtung entlang der Einrichtungslängsachse gegenüber Fig.4 gewählt, während die sonstigen Einrichtungsteile unverändert sind. Die Kraftwandlervorrichtung ist innerhalb der bewegbaren Formaufspannplatte 10 angeordnet und durch einen in der bewegbaren Formaufspannplatte 10 ausgenommenen Zylinderraum 88 gebildet, in welchem ein mit dem Kniehebelelement in Verbindung stehender Kolben 80 bewegbar geführt ist. Auch in diesem Ausführungsbeispiel wird die aufgebrachte Schließkraft in einen hydraulischen Druck gewandelt und zur Ausgleichsvorrichtung 13, 20 weitergeleitet.

Die Erfindung ist darauf aber nicht beschränkt. Die Kraftwandlervorrichtung kann an beliebiger Stelle in der erfindungsgemäßen Einrichtung vorgesehen sein, solange die Schließkraft durch sie hindurchgeleitet wird. So kann die Kraftwandlervorrichtung zwischen der Schließvorrichtung 9 und der bewegbaren Formaufspannplatte 10 angeordnet sein.

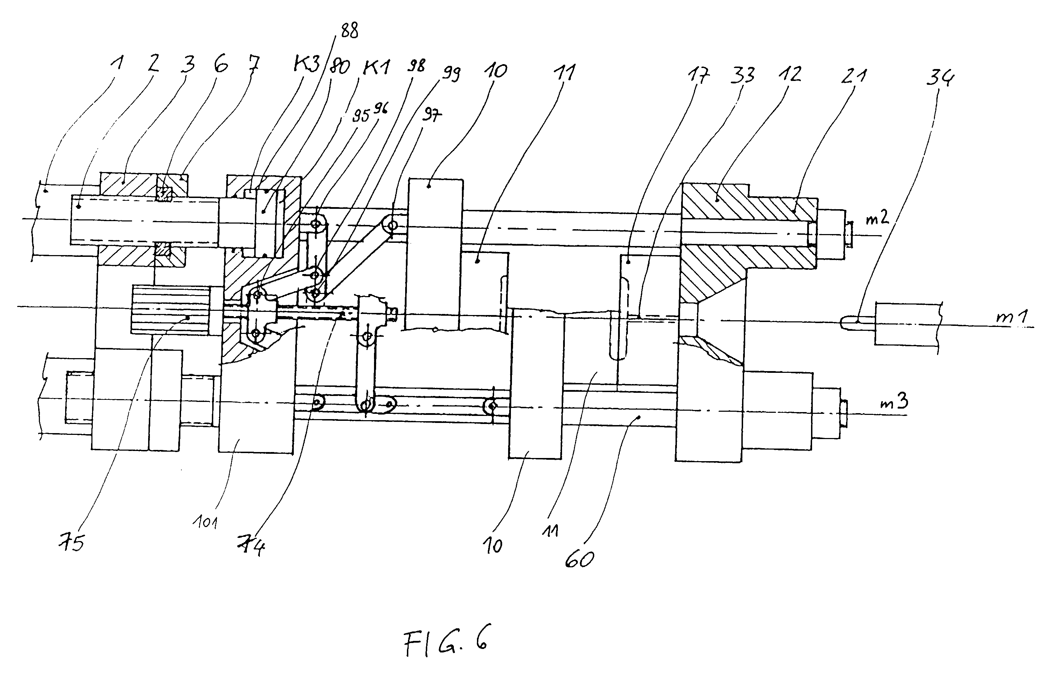

In Fig.6 ist eine weitere Ausführungsform der Erfindung dargestellt, in welcher das Kniehebelelement zweiteilig ausgebildet, wobei jeder Teil fünf Gelenke 95, 96, 97, 98, 99 umfaßt. Es ist mit seiner Antriebsachse 74 entlang der Einrichtungslängsachse m1 ausgerichtet, wobei die beiden Teile symmetrisch zur Einrichtungslängsachse m1 jeweils an der bewegbaren Formaufspannplatte 10 und an einer gegenüber dem Rahmenabstützteil 3 abgestützten Trägerplatte 101 angelenkt sind. Die Trägerplatte 101 trägt einerseits den Kniehebelelementantrieb 75 und andererseits zwei mit zur Einrichtungslängsachse m1 parallelen Achsen m2, m3 fluchtende Kraftwandlervorrichtungen 88, 80, wobei die Anlenkpunkte 97 des Kniehebelelementes während des Schließvorganges sich mit der bewegbaren Formaufspannplatte 10 entlang dieser parallelen Achsen m2, m3 bewegen.

Die Kraftwandlervorrichtungen 80, 88 sind dabei innerhalb der Trägerplatte 101 angeordnet.

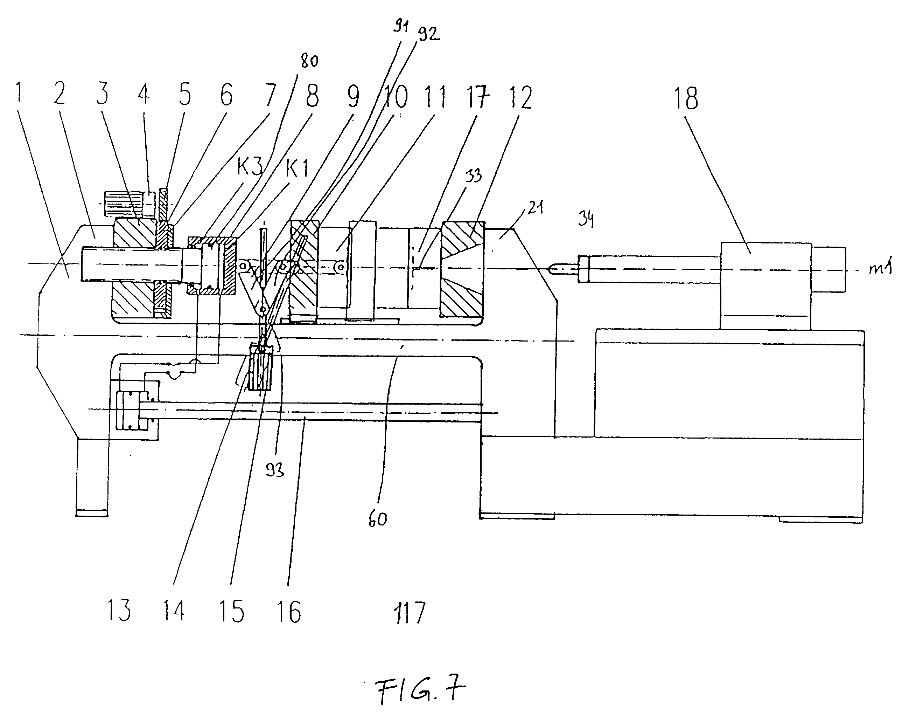

In Fig.7 ist die Anwendbarkeit des erfindungsgemäßen Prinzips auf eine andere Rahmenform dargestellt, wobei anstelle der Rahmenhäupter und der diese verbindenden Zugholme ein einteiliger, H-förmiger Rahmen ausgebildet ist, dessen Schenkeln 1, 21 die Rahmenstützteile 3 und 12 tragen. Die Ausgleichsvorrichtung 13, 20 verläuft im gegenüberliegenden Schenkelbereich parallel zur Einrichtungslängsachse m1.

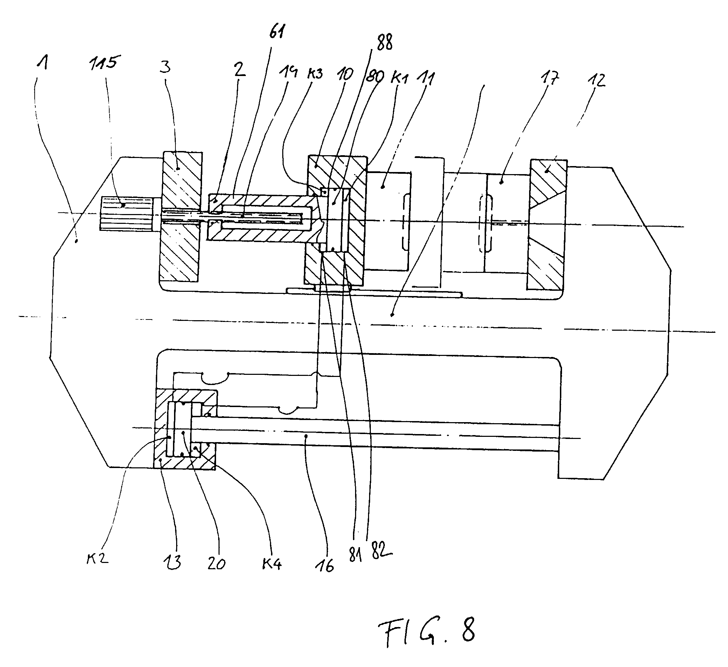

Auch im Ausführungsbeispiel gemäß Fig.8 ist ein H-förmiger Rahmen ausgebildet, nur erfolgt die mechanische Kraftumsetzung mit Hilfe eines Spindelantriebes 61, der aus einer antreibbaren Spindel 14 und einem Gewindezylinder 2 zusammengesetzt ist.

Die antreibbare Spindel 14 des Spindelantriebs 61 greift stirnseitig in das Gewinde des Gewindezylinders 2 ein. Eine Antriebseinheit 115 der Spindel 14 ist gegenüber einer dem Rahmenabstützteil 3 abgestützt und der Gewindezylinder 2 an seinem freien Ende mit der innerhalb der bewegbaren Formaufspannplatte 10 angeordneten Kraftwandlervorrichtung 80, 88 verbunden.

Die Kraftwandlereinrichtung ist dabei wiederum durch einen innerhalb der bewegbaren Formaufspannplatte 10 ausgenommenen Zylinderraum 88 gebildet, in welchem ein Kolben 80 bewegbar geführt ist, der mit dem Gewindezylinder 2 verbunden ist.

## Patentansprüche

1. Spritzgießeinrichtung mit einem Rahmen, wobei eine ortsfeste und eine über eine Schließvorrichtung bewegbare Formaufspannplatte bzw. Formhälfte zwischen Rahmenabstützteilen einander gegenüberliegend angeordnet und schließbar sind, und wobei zumindest eine parallel zur Einrichtungslängsachse angeordnete Ausgleichsvorrichtung zum Ausgleich des durch die aufgebrachte Schließkraft im Rahmen während des Schließvorganges verursachten Biegemoments vorgesehen ist, **dadurch gekennzeichnet,** daß die Schließvorrichtung eine mechanische Kraftumsetzeinheit (9, 61) umfaßt, daß zumindest eine Kraftwandlervorrichtung (8, 80) zur Umwandlung der aufgebrachten Schließkraft in einen Flüssigkeitsdruck vorgesehen ist, welche Kraftwandlervorrichtung (8, 80) mit ihrem zumindest einen Druckausgang (81, 82) mit der Ausgleichsvorrichtung (13) verbunden ist, und daß gegebenenfalls der Ausgang der Kraftwandlervorrichtung (8, 80) mit einer Druckerzeugungseinheit (44, 45) verbindbar ist, über welche Flüssigkeitsdruck zur Erzeugung der Schließkraft aufbringbar ist.

2. Spritzgießeinrichtung nach Anspruch 1, **dadurch gekennzeichnet,** daß die mechanische Kraftumsetzeinheit aus einem aus zumindest zwei gelenkig verbundenen Hebeln (91, 92) gebildeten, streckbaren Kniehebelelement (9) gebildet ist.

3. Spritzgießeinrichtung nach Anspruch 2, **dadurch gekennzeichnet,** daß zumindest ein erstes Hebelende an einer zwischen den Rahmenabstützteilen (3, 12) angeordneten Kraftwandlervorrichtung (8, 80) angelenkt ist, welche die auf die bewegbare Formaufspannplatte (10) wirkende Schließkraft zumindest teilweise an die Ausgleichsvorrichtung (13, 20) weiterleitet, und daß gegebenenfalls die Schließkraft im gestreckten Zustand des Kniehebelelements (9) über die Kraftwandlervorrichtung (8, 80) aufbringbar ist.

4. Spritzgießeinrichtung nach Anspruch 3, **dadurch gekennzeichnet**, daß zumindest ein weiteres Hebelende des Kniehebelements (9) an der bewegbaren Formaufspannplatte (10) angelenkt ist.

5. Spritzgießeinrichtung nach Anspruch 3, **dadurch gekennzeichnet**, daß die Kraftwandlervorrichtung innerhalb der bewegbaren Formaufspannplatte (10) angeordnet ist. welche durch einen in der bewegbaren Formaufspannplatte (10) ausgenommenen Zylinderraum (88) gebildet ist, in welchem ein Kolben (80) bewegbar geführt ist.

6. Spritzgießeinrichtung nach Anspruch 2 bis 5, **dadurch gekennzeichnet,** daß das Kniehebelelement (9) aus über zumindest ein Gelenk (93) miteinander verbundenen Hebeln (91, 92) gebildet ist, über welches Gelenk (93) unter Streckung der beiden Hebeln (91, 92) mittels eines hydraulischen Antriebes (14', 15') das Kniehebelelement (9) aus einem außermittigen in den gestreckten Zustand bewegbar ist.

7. Spritzgießeinrichtung nach Anspruch 2 bis 5, **dadurch gekennzeichnet**, daß das Kniehebelelement (9) aus über zumindest ein Gelenk (93) miteinander verbundenen Hebeln (91, 92) gebildet ist, über welches Gelenk (93) unter Streckung der beiden Hebeln (91, 92) mittels eines elektromotorischen Gewindespindelantriebes (14, 15) das Kniehebelelement (9) aus einem außermittigen in den gestreckten Zustand bewegbar ist.

8. Spritzgießeinrichtung nach Anspruch 2 bis 7, **dadurch gekennzeichnet**, daß das Kniehebelelement vier oder fünf Gelenke (95, 96, 97, 98, 99) umfaßt.

9. Spritzgießeinrichtung nach Anspruch 8, **dadurch gekennzeichnet**, daß das Kniehebelelement (95, 96, 97, 98, 99) zweiteilig ausgebildet und entlang der Einrichtungslängsachse (m1) angetrieben ist, wobei die beiden Teile symmetrisch zur Einrichtungslängsachse (m1) jeweils an der bewegbaren Formaufspannplatte (10) und an einer gegenüber einem der Rahmenabstützteile (3) abgestützten Trägerplatte (101) angelenkt sind, welche Trägerplatte (101) den Kniehebelelementantrieb (75) trägt, wobei die Anlenkpunkte (97) während des Schließvorganges sich mit der bewegbaren Formaufspannplatte (10) entlang zur Einrichtungslängsachse (m1) parallelen Achsen (m2, m3) bewegen, und daß jeweils eine mit den parallelen Achsen (m2, m3) fluchtende Kraftwandlervorrichtung (80, 88) angeordnet ist.

10. Spritzgießeinrichtung nach Anspruch 9, **dadurch gekennzeichnet**, daß die Kraftwandlervorrichtungen (80, 88) innerhalb der Trägerplatte (101) angeordnet sind.

11. Spritzgießeinrichtung nach Anspruch 1, **dadurch gekennzeichnet**, daß die mechanische Kraftumsetzvorrichtung aus einem eine antreibbare Spindel (14) und einen Gewindezylinder (2) umfassenden Spindelantrieb (61) gebildet ist.

12. Spritzgießeinrichtung nach Anspruch 11, **dadurch gekennzeichnet**, daß die antreibbare Spindel (14) des Spindelantriebs (61) stirnseitig in das Gewinde des Gewindezylinders (2) eingreift, und daß eine Antriebseinheit (115) der Spindel (14) gegenüber einem der Rahmenabstützteile (3, 12) abgestützt und der Gewindezylinder (2) an seinem freien Ende mit der innerhalb der bewegbaren Formaufspannplatte (10) angeordneten Kraftwandlervorrichtung (8, 88) verbunden ist.

13. Spritzgießeinrichtung nach Anspruch 12, **dadurch gekennzeichnet**, daß die Kraftwandlereinrichtung durch einen innerhalb der bewegbaren Formaufspannplatte (10) ausgenommenen Zylinderraum (88) gebildet ist, in welchem ein Kolben (80) bewegbar geführt ist, der mit dem freien Ende des Gewindezylinders (2) verbunden ist.

14. Spritzgießeinrichtung nach einem der vorhergehenden Ansprüche, **dadurch gekennzeichnet**, daß die hydraulische Druckerzeugungseinheit (44, 45) sowohl mit der Kraftwandlervorrichtung (8, 80) als auch mit der Ausgleichsvorrichtung (13, 20) verbunden ist, wobei die Schließkraft und die das Biegemoment ausgleichende Kraft über die Druckerzeugungseinheit (44, 45) aufbringbar sind.

15. Spritzgießeinrichtung nach Anspruch 14, **dadurch gekennzeichnet**, daß die zusätzliche Druckerzeugungseinheit aus einem hydraulischen Zylinder (44) und einem darin geführten Kolben (45) mit Schaft (42) gebildet ist, welcher Schaft (42) an seinem freien Ende ein Außengewinde zum Eingriff in ein über einen Motor (40) angetriebenes Drehteil (41) mit entsprechendem Innengewinde aufweist.

16. Spritzgießeinrichtung nach einem der vorhergehenden Ansprüche, **dadurch gekennzeichnet**, daß die Kraftwandlervorrichtung aus einem hydraulischen Zylinder (8, 88) und einem darin geführten Kolben (80) gebildet ist, welcher Kolben (80) innerhalb des Zylinders (8, 88) mit seiner Stirnseite einen ersten veränderbaren Zylinderraum (K1) begrenzt, welcher erste Zylinderraum (K1) über einen Druckausgang (82) und eine Druckleitung mit der Ausgleichsvorrichtung (13, 20) verbunden ist.

17. Spritzgießeinrichtung nach Anspruch 16, **dadurch gekennzeichnet**, daß der Kolben (80) mit seinem der Stirnseite gegenüberliegenden Schaftteil einen zweiten veränderbaren Zylinderraum (K3) des Zylinders (8) begrenzt, welcher zweite Zylinderraum (K3) über einen weiteren Druckausgang (81) und eine weitere Druckleitung mit der Ausgleichsvorrichtung (13, 20) verbunden ist.

18. Spritzgießeinrichtung nach einem der vorhergehenden Ansprüche, **dadurch gekennzeichnet**, daß die Kraftwandlervorrichtung (8, 80) zwischen einem der Rahmenabstützteile (3, 12) und der Schließvorrichtung (9) angeordnet ist.

19. Spritzgießvorrichtung nach einem der vorhergehenden Ansprüche 1 bis 17, **dadurch gekennzeichnet,** daß die Kraftwandlervorrichtung (88, 80) zwischen der Schließvorrichtung (9, 61) und der bewegbaren Formaufspannplatte (10) angeordnet ist.

20. Spritzgießeinrichtung nach Anspruch 18, **dadurch gekennzeichnet**, daß der Abstand zwischen dem einen Rahmenabstützteil (3) und der Kraftwandlervorrichtung (88, 80) mittels eines motorisch antreibbaren Zahnkranzes (6) veränderbar ist, welcher Zahnkranz (6) eine zentrale Gewindebohrung aufweist, in welcher ein mit einem entsprechenden Außengewinde versehener und mit dem Kolben (80) der Kraftwandlervorrichtung (8, 80) verbundener Schaft (2) eingreift.

21. Spritzgießeinrichtung nach einem der vorhergehenden Ansprüche, **dadurch gekennzeichnet,** daß die Ausgleichsvorrichtung durch einen hydraulischen Zylinder (13) und einen darin bewegbaren Kolben (20) gebildet ist, und daß der Kolben stirnseitig und schaftseitig jeweils einen veränderbaren Raum (K2, K4) begrenzt, wobei der stirnseitige Raum (K2) mit dem stirnseitigen Raum (K1) der Kraftwandlervorrichtung und der schaftseitige Raum (K4) mit dem schaftseitigen Raum (K3) der Kraftwandlervorrichtung verbunden sind.
